# FASCICULE DE BREVET EUROPEEN

(11) **EP 1 688 698 B1**
(45) Date de publication et mention de la délivrance du brevet: **18.11.2015**
(21) Numéro de dépôt: 06290179.8
(22) Date de dépôt: 30.01.2006
(51) Int. Cl.: F41H 13/00, F41G 3/04, G01S 7/10, F41G 9/00

(54) **Procédé de gestion des capacités opérationnelles d'une plate-forme et dispositif mettant en oeuvre ce procédé**
Verfahren zur Steuerung der Kapazitäten eines Plattforms und eine Vorrichtung zur Umsetzung des Verfahrens
Method for managing the operational capacities of a platform and device for implementing the method

(30) Priorité: 03.02.2005 FR 0501180
(43) Date de publication de la demande: 09.08.2006
(73) Titulaire: NEXTER Systems, 42328 Roanne (FR)
(72) Inventeur: Miotti, Luc, 78960 Voisin le Bretonneux (FR)
(74) Mandataire: Célanie, Christian

(56) Documents cités:
- US-A- 5 781 437
- US-B1- 6 201 495
- DIDOMIZIO J ET AL: "FIREFINDER: Position Analysis System Advanced Development Model", IEEE AEROSPACE AND ELECTRONIC SYSTEMS MAGAZINE, IEEE SERVICE CENTER, PISCATAWAY, NJ, US, vol. 11, no. 9, 1 September 1996 (1996-09-01), pages 25-29, XP002247140, ISSN: 0885-8985, DOI: 10.1109/62.536801

## Description

Le domaine technique de l'invention est celui des procédés et dispositifs permettant de gérer les capacités opérationnelles de plate-formes, et en particulier de véhicules et notamment de véhicules de combat. Au sens de l'invention on entendra par capacité opérationnelle les capacités ou caractéristiques du véhicule qui sont mesurables par une portée : par exemple une capacité d'observation, une capacité de communication, une capacité de tir, une détectabilité par une menace donnée etc...

On entendra par plate-forme tout type de moyen qui est porteur de capteurs ou de moyens de communication ayant une portée donnée ou bien qui est équipé de moyens de tirs ayant aussi une portée donnée. Au sens de l'invention une plate-forme sera avantageusement un élément mobile tel un véhicule de combat, une pièce d'artillerie, ou bien un combattant individuel. Dans une certaine mesure une plate-forme pourra éventuellement être un élément fixe, à partir du moment où cet élément est doté de capteurs ou de moyens de communication, ou de moyens de tirs ayant une portée donnée.

Les véhicules de combat progressent généralement en groupes de deux à cinq véhicules. Chaque véhicule est habituellement doté de moyens d'observation optique (dans le domaine visible ou Infra rouge), de détection radar ainsi que de moyens de communication radio. Il comporte aussi un ou plusieurs systèmes d'arme ayant une certaine portée.

Les véhicules communiquent les uns avec les autres pour échanger les informations sur leur environnement immédiat. Les moyens de détection et de communication de chaque véhicule ont une certaine portée qui dépend des conditions locales (conditions atmosphériques, obstacles, perturbations électromagnétiques). Concernant les moyens de communication radio, chaque véhicule peut servir de relais à un autre véhicule, accroissant ainsi la portée de communication de ce dernier.

Lors du déroulement d'une mission il se pose pour un chef de véhicule le problème de pouvoir connaître rapidement la portée des moyens de détection et/ou de communication de son véhicule ainsi que de ceux du groupe de véhicule. Il se pose aussi le problème de prévoir une telle portée pendant ou à l'issue d'un déplacement. Ce problème est en effet renforcé lorsque les véhicules se déplacent et qu'ils cherchent à maintenir entre eux un contact radio.

Un autre problème est de déterminer la détectabilité d'un véhicule par un ennemi compte tenu des senseurs et des moyens de communication qu'il met en oeuvre ainsi que de sa discrétion acoustique et électro magnétique.

Un problème analogue se pose pour pouvoir déterminer rapidement quelle cible peut être atteinte par le système d'arme du véhicule.

Enfin, lorsque des objectifs ennemis sont connus, il peut être utile de visualiser rapidement la portée de ces derniers tant du point de vue de leurs propres systèmes d'arme que de celle de leurs moyens d'observation et/ou de communication.

Tous ces problèmes rencontrés avec les véhicules de combat se rencontrent également dans une certaine mesure avec les autres plate-formes du champ de bataille, telles les pièces d'artillerie ou bien les combattants individuels.

On connaît déja le document suivant qui décrit un procédé permettant de gérer les capacités opérationelles de véhicules de combat : "FIREFINDER: Position Analysis System Advanced Development Model", DIDOMIZIO J ET AL, IEEE AEROSPACE AND ELECTRONIC SYSTEMS MAGAZINE, IEEE SERVICE CENTER, PISCATAWAY, NJ, US, vol. 11, no. 9, 1 septembre 1996 (1996-09-01), pages 25-29, XP002247140.

On connaît déjà le brevet US5781437 qui décrit une interface homme/machine permettant de diriger un véhicule dans un environnement donné. L'interface divulguée dans ce document met en oeuvre des senseurs, un moyen de communication et un système d'arme. Un écran tactile permet de visualiser la position du véhicule sur une carte issue d'une base de données. Il est prévu dans ce document de réaliser une détection de ligne de visée. Cependant un inconvénient majeur ce cette interface réside dans le fait que la ligne de visée est uniquement une direction indiquant une direction de visée. Ainsi, cette direction est une droite et ne permet pas de représenter une portée permettant à l'opérateur de visualiser la capacité opérationnelle du véhicule.

C'est le but de l'invention que de proposer un procédé et un dispositif permettant de pallier de tels problèmes en apportant notamment une aide à la détermination de la portée de senseurs et/ou de moyens de communication et/ou une aide à la maîtrise de l'environnement de combat en améliorant la connaissance des capacités ennemies ainsi que la détectabilité des plate-formes du groupe.

Ainsi l'invention a pour objet un procédé de gestion des capacités opérationnelles de plate-formes, et notamment de véhicules, et en particulier de véhicules de combat, procédé dans lequel on met en oeuvre des moyens permettant de déterminer au moins une portée en fonction de données d'environnement d'au moins un senseur et/ou moyen de communication et/ou au moins un système d'arme emporté par au moins une plate-forme, et on met en oeuvre un logiciel de cartographie permettant de visualiser sur un écran une zone de terrain autour d'une représentation schématique de la ou des plate-formes, caractérisé en ce qu'on fait apparaître au voisinage ou autour de la ou des plate-formes au moins une surface, ou une courbe et/ou une indication littérale visualisant une portée avec une performance donnée du senseur et/ou du moyen de communication et/ou du système d'arme et/ou de la détectabilité de la ou des plate-formes et en ce qu'on introduit, à l'aide d'une interface homme-machine appropriée, les données relatives à la portée d'un relais de communication, la portée de ce relais étant rendue ensuite visible graphiquement et/ou littéralement sur l'écran de la ou des plate-formes.

Selon une autre caractéristique de l'invention, on pourra introduire dans les moyens de détermination de portée, et à l'aide d'une interface homme-machine appropriée, de nouvelles données d'environnement.

Les données d'environnement pourront être ensuite visualisées sur l'écran après leur introduction.

Avantageusement, les moyens de communication pourront permettre d'échanger avec au moins une autre plate-forme ou relais fixe des informations relatives à la localisation des plate-formes ainsi que les informations relatives à la portée des senseurs et/ou des moyens de communication et/ou des systèmes d'arme des plate-formes et/ou de la détectabilité et on pourra donc visualiser sur l'écran de chaque plate-forme la position de chaque plate-forme et/ou relais ainsi que la ou les portées de chacun.

Les moyens de communication pourront permettre également d'échanger entre les plate-formes et relais fixes les informations relatives à leur environnement et notamment aux obstacles réduisant la portée des senseurs et/ou moyens de communication et/ou systèmes d'armes et/ou modifiant la détectabilité, les obstacles étant alors rendus visibles sur les écrans de chaque plate-forme.

Suivant une autre caractéristique de l'invention, on pourra visualiser pour chaque senseur et/ou moyen de communication et/ou système d'arme au moins deux surfaces ou courbes et/ou indications littérales visualisant la portée, chaque surface ou courbe ou indication correspondant à une performance différente pour le senseur et/ou le moyen de communication et/ou le système d'arme considéré et/ou la détectabilité.

Selon une variante, on pourra faire apparaître sur l'écran au moins une plate-forme ennemie on pourra aussi faire apparaître au voisinage ou autour de cette plate-forme ennemie au moins une courbe ou surface et/ou indication littérale visualisant la portée estimée de senseurs et/ou moyens de communication et/ou système d'arme attachés à cette plate-forme ennemie, les portées étant calculées à partir d'éléments fournis par une base de données.

Selon un autre mode de réalisation de l'invention, on pourra définir à l'aide d'une interface homme-machine appropriée un point de destination sur l'écran et on calculera alors la portée prévisible du senseur et/ou du moyen de communication et/ou du système d'arme de la plate-forme et/ou de détectabilité lorsque la plate-forme se trouvera au point indiqué, et on visualisera enfin sur l'écran au moins une surface ou une courbe et/ou une indication littérale visualisant la portée prévisible au point indiqué.

On pourra également définir au moins un itinéraire entre un point de départ de la plate-forme et le point de destination choisi et on visualisera sur l'écran par au moins une surface ou une courbe et/ou une indication littérale la portée prévisible le long de l'itinéraire pour le senseur et/ou le moyen de communication et/ou le système d'arme de la ou des plate-forme et/ou la détectabilité.

On pourra calculer en temps réel les portées pendant le déplacement de la ou des plate-formes et visualiser sur l'écran de chaque plate-forme les portées ainsi calculées.

Selon un autre mode de réalisation, on pourra prévoir des moyens permettant de détecter une diminution de performance de communication entre la plate-forme et au moins une autre plate-forme ou relais et on ferra apparaître sur l'écran au moins une suggestion de position pour la plate-forme permettant d'améliorer la communication.

Si on met en oeuvre le procédé selon l'invention avec un groupe d'au moins trois plate-formes ou d'au moins deux plate-formes et d'au moins un relais, on peut mémoriser les portées calculées pendant un certain délai et on peut faire alors apparaître sur l'écran au moins une suggestion de position pour au moins une plate-forme du groupe de façon à rétablir les communications en cas de rupture de continuité du réseau par panne ou destruction des moyens de communication d'un relais ou d'une plate-forme.

L'invention a également pour objet un dispositif de gestion des capacités opérationnelles de plate-formes, et notamment de véhicules et en particulier de véhicules blindés, dispositif mettant en oeuvre le procédé selon l'invention, ce dispositif est caractérisé en ce qu'il comprend au moins un senseur et/ou moyen de communication et/ou système d'arme, un calculateur incorporant un logiciel de cartographie et un écran permettant de visualiser une zone de terrain autour d'une représentation schématique d'au moins une plate-forme, le calculateur incorporant également un logiciel permettant d'une part de calculer la portée du senseur et/ou du moyen de communication et/ou du système d'arme et/ou la détectabilité en tenant compte de données d'environnement de la plate-forme et d'autre part de définir et faire apparaître sur l'écran au moins une surface ou une courbe et/ou une indication littérale visualisant la portée avec une performance donnée du senseur et/ou du moyen de communication et/ou du système d'arme et/ou de détectabilité.

Avantageusement, le dispositif de gestion des capacités opérationnelles de plate-formes est tel que les moyens de communication permettent l'échange avec au moins une autre plate-forme et/ou relais fixe de données relatives aux portées calculées et le logiciel de calcul de portée calcule et fait apparaître la portée globale du senseur et/ou des moyens de communication et/ou de détectabilité de la plate-forme considérée en tenant compte des relais de communications constitués par la ou les autres plate-formes et/ou relais fixes.

Le logiciel de calcul de portée pourra également utiliser des mesures de caractéristiques réelles effectuées sur le terrain.

L'invention sera mieux comprise à la lecture de la description qui va suivre de modes particuliers de réalisation, description faite en référence aux dessins annexés et dans lesquels :
- la figure 1 schématise un dispositif d'amélioration des capacités selon l'invention,
- la figure 2a montre un écran sur lequel on a figuré une plate-forme, telle un véhicule dans un environnement cartographié,
- la figure 2b montre un exemple d'interface écran tactile permettant le choix du type de visualisation souhaité,
- la figure 2c montre l'écran de cette même plate-forme après introduction d'obstacles de terrain,
- la figure 3 montre un écran sur lequel on a figuré un groupe de plate-formes dans un environnement cartographié,
- la figure 4 montre un écran sur lequel on a figuré une plate-forme avec un point de destination prévu,
- la figure 5 montre un écran sur lequel on a figuré un trajet prévisible pour la plate-forme,
- la figure 6 montre un écran sur lequel on a figuré un groupe de deux plate-formes amies et une plate-formes ennemie,
- les figures 7a et 7b montrent deux écrans successifs affichés par le procédé selon l'invention, le deuxième écran fournissant une suggestion de positionnement pour une plate-forme après la disparition d'un relais.

L'invention va être maintenant décrite dans le cadre d'une application ou les plate-formes sont des véhicules de combat. L'Homme du Métier transposera aisément cette description à d'autres types de plate-formes, telles que des systèmes d'artillerie ou bien des combattants individuels dotés d'armements portatifs ayant une portée donnée, combattants portant des moyens de communication.

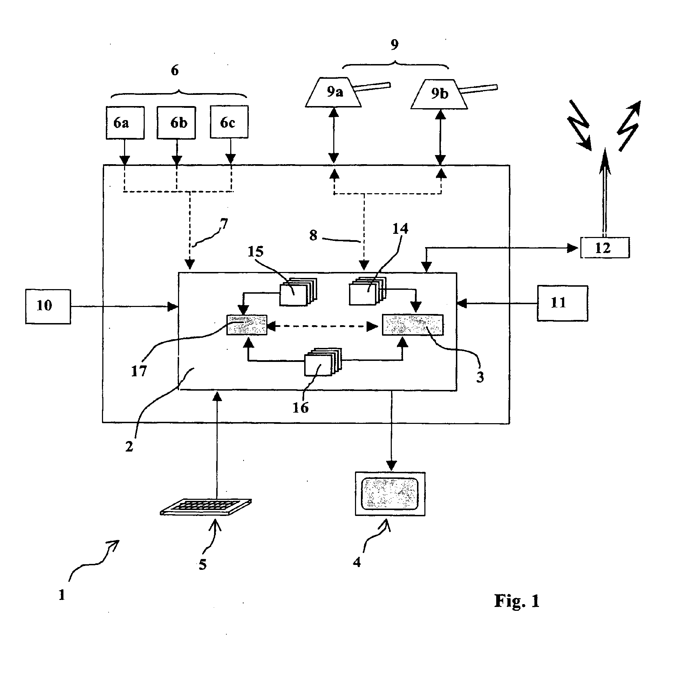

En se reportant à la figure 1, un dispositif 1 selon l'invention permettant de gérer et améliorer les capacités opérationnelles de véhicules, comprend principalement un calculateur 2 incorporant un logiciel de cartographie 3. Le calculateur 2 est relié à un écran 4 et peut être commandé par une interface utilisateur appropriée 5 (schématisée ici par un clavier). L'écran 4 et le clavier 5 constituent un interface Homme-machine.

Le calculateur 2 reçoit par le biais d'un BUS de connexion 7 les informations fournies par des senseurs 6 (ici trois senseurs 6a, 6b, 6c sont représentés). Les senseurs seront par exemple des senseurs de détection de cible de technologie optique, infra rouge, radar ou audio. Le calculateur 2 est également relié par un autre bus de commande 8 à un ou plusieurs systèmes d'arme 9 (ici deux systèmes d'arme 9a et 9b sont figurés). Les systèmes d'arme pourront être des systèmes canons de gros ou moyen calibre, des systèmes lance missile ou des dispositifs de défense rapprochée.

D'une façon classique le calculateur 2 pourra remplir une fonction de conduite de tir en utilisant les informations fournies par les senseurs 6 et les consignes données par l'interface utilisateur 5 pour commander les pointages et le tir des systèmes d'arme 9.

Le calculateur 2 reçoit également les données fournies par un senseur d'environnement 10, par exemple un ensemble de capteurs météo, ainsi que les informations de positionnement fournies par un système de positionnement par satellite (GPS) 11.

Le calculateur 2 est enfin relié à un moyen de communication radio 12, qui permet d'assurer les échanges (voies et données) entre différents véhicules.

Le calculateur 2 incorpore dans ses mémoires ou registres un certain nombre de logiciels et de données.

Il comportera ainsi un logiciel de cartographie 3 (cartographie 3D donc en trois dimensions) qui permet de visualiser en permanence sur l'écran 4 la carte d'une zone de terrain autour d'une représentation schématique du véhicule emportant le dispositif. De tels logiciels de cartographie sont bien connus et couramment mis en oeuvre pour les véhicules civils ou militaires. Ils utilisent une base de données cartographiques 14 de la zone où se trouve le véhicule et les informations fournies par le GPS 11 permettent de choisir la partie de carte utile et de positionner le véhicule sur cette partie de carte. La base de données cartographique pourra, suivant un mode de réalisation simple de l'invention, comporter uniquement des images scannées de cartes du terrain considéré. Cette base pourra également être avantageusement une base de données complète en trois dimensions et incorporant les informations de dénivelées.

Le moyen de communication 12 reçoit par ailleurs des véhicules amis des informations relatives à leur localisation. Ces informations sont fournies au logiciel de cartographie 3 qui permet donc de faire apparaître les véhicules amis sur l'écran 4 avec la localisation appropriée.

Les senseurs 6 et/ou les moyens de communication 12 fournissent également des informations sur la présence de véhicules ennemis sur la zone. Lorsque ces véhicules ennemis sont repérés par un ou plusieurs des senseurs 6, des moyens d'analyse incorporés au calculateur 2 permettent de déterminer la nature du ou des véhicules ennemis (par exemple par comparaison entre les données mesurées et des informations sur le parc de véhicules ennemis, informations qui sont stockées dans une base de données 15).

Le logiciel de cartographie 3 fait donc apparaître les véhicules ennemis sur l'écran 4 avec une symbolique adaptée permettant de les distinguer des véhicules amis.

Les systèmes de cartographie 3D habituels peuvent comporter des informations relatives à la végétation et/ou aux bâtiments. Cependant, si la base de données cartographique 14 est incomplète, on prévoira avantageusement au niveau du calculateur 2 une base de données 16 fournissant des informations complémentaires sur végétation et/ou bâtiments. Ces données seront introduites manuellement dans l'environnement cartographique à partir de l'interface 5.

L'introduction sera facilitée par le recours par exemple à des icônes affichées sur l'écran 4 à partir d'un menu déroulant. Chaque item (végétation ou bâtiment) sera associé à des caractéristiques, telles que dimensions, notamment hauteur des bâtiments et localisation, caractéristiques qui seront, soit mesurées à l'aide des senseurs, soit approximées parmi plusieurs choix possibles fournis dans un menu déroulant.

Les données d'environnement ainsi saisies manuellement pourront être transmises avec leurs caractéristiques (type, localisation, dimensions) aux autres véhicules via le moyen de communication 12.

Conformément à l'invention le calculateur 2 incorpore également un logiciel 17 permettant notamment de calculer :
la portée du ou des senseurs 6, et/ou
la portée du moyen de communication 12, et/ou
la portée du ou des systèmes d'arme 9.

Le logiciel 17 utilise les données d'environnement connues et fournies par le logiciel de cartographie 3.

La portée d'un senseur 6 dépend de ses caractéristiques physiques ainsi que de l'environnement opérationnel. Pour un capteur optique la présence d'obstacles (végétation, bâtiments) sur le terrain réduit la portée d'observation.

Pour un capteur radar ou électromagnétique c'est l'environnement électromagnétique du terrain qui peut venir modifier la portée. Cette portée est aisément calculée à partir d'algorithmes classiques. On pourra distinguer opérationnellement soit une portée maximale à laquelle il est possible de détecter un type de cible donnée (fantassin, char, véhicule blindé léger...), soit une portée maximale à laquelle il est possible de se faire détecter avec une probabilité donnée en fonction du niveau d'activité du véhicule (nombre et type de senseurs utilisés, puissance d'émission des moyens de communication, bruits et rayonnements électromagnétique du véhicule).

Pour ce dernier type de calcul de portée, le calculateur utilisera les caractéristiques du véhicule lui-même du point de vue rayonnement au moment du calcul ainsi que les caractéristiques et le nombre de senseurs mis en oeuvre. Ces caractéristiques pourront être également mesurées en temps réel.

La portée du moyen de communication 12 dépend des performances de celui ci (plage de fréquence porteuse, forme d'onde, puissance d'émission), des couplages éventuels avec le véhicule, de la météo (couverture nuageuse, précipitations, vent). Les performances du moyen de communication 12 ainsi que les différents diagrammes de rayonnements des équipements sont mis en mémoire dans le calculateur 2 qui est donc capable de déterminer, à l'aide d'un algorithme classique de calcul des lois de propagation des ondes radio, quelle est la portée maximale espérée du moyen de communication 12 avec une qualité de communication donnée. Les lois de calcul pourront être corrigées par des mesures réelles sur le terrain des performances de communication entre deux véhicules.

Pour un système d'arme 9 enfin, la portée dépend des caractéristiques des munitions qu'il est possible de mettre en oeuvre ainsi que des caractéristiques d'environnement (altitude du terrain et/ou obstacles présents), et des données fournies par les moyens météo 10.

Le calculateur 2 est capable de déterminer en fonction des caractéristiques du système d'arme 9 et de ses munitions ainsi que des données d'environnement quelle est la portée maximale qu'il est possible d'atteindre (calcul réalisé généralement à partir de tables de tir mémorisées dans le calculateur).

Tous ces calculs sont bien entendus possibles aussi bien à partir des données du véhicule considéré qu'à partir de données relatives à un véhicule ennemi détecté, données qui sont incluses dans la base de données 15.

Les algorithmes de calcul de portée de moyens de tir, de portée de moyens de communication et de portée de senseurs sont bien connus de l'Homme du Métier et il n'est donc pas nécessaire de les décrire en détails.

L'objet de l'invention est plus particulièrement d'apporter une aide opérationnelle en fournissant des moyens ergonomiques permettant de visualiser un ou plusieurs type de portées sur l'écran de contrôle et permettant également de communiquer avec d'autres véhicules pour améliorer la maîtrise de l'environnement de combat.

Cet objectif est atteint en calculant puis en faisant apparaître sur l'écran 4 au moins une surface ou une courbe permettant de visualiser la portée souhaitée (portée du senseur et/ou du moyen de communication et/ou du système d'arme et/ou détectabilité globale du véhicule).

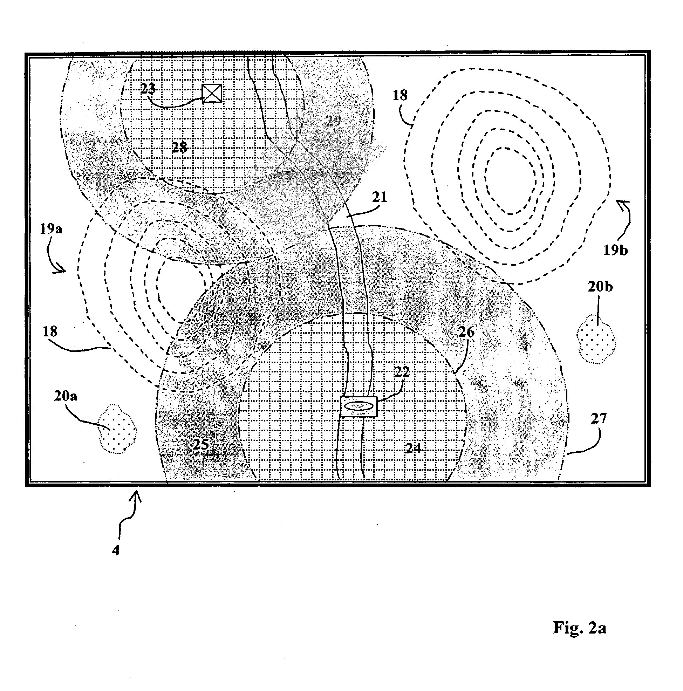

La figure 2a montre ainsi l'écran 4 du dispositif sur lequel on a fait apparaître des données cartographiques comprenant ici des courbes de niveau 18 permettant de matérialiser deux collines 19a, 19b, deux bosquets 20a, 20b et une route 21.

Le véhicule blindé emportant le dispositif selon l'invention est représenté schématiquement par un pictogramme normalisé 22.

On a représenté en 23 un relais de communication fixe.

Conformément au procédé selon l'invention, après calcul des portées (ici les portées des moyens de communication du véhicule) on a fait apparaître sur l'écran 5 deux surfaces 24 et 25 entourant le véhicule 22. Ces surfaces sont délimitées par des courbes 26 et 27. Chaque surface correspond à une performance différente pour les moyens de communications.

La surface interne 24 correspond ainsi à une zone dans laquelle, suivant les résultats des calculs, la probabilité d'obtenir une liaison radio avec une compréhension phonique de 3/5 est supérieure à 90%.

La surface externe 25 correspond à une zone dans laquelle, suivant les résultats des calculs, la probabilité d'obtenir une liaison radio avec une compréhension phonique de 1/5 est supérieure à 90%. Bien entendu ces performances sont données ici à titre d'exemple. Les valeurs souhaitées pourront être paramétrées par l'utilisateur à partir du clavier et/ou de l'écran.

Suivant l'exemple de la figure 2a on a également fait apparaître sur l'écran des zones de probabilité de communication 28 et 29 entourant le relais de communication 23. Le calcul a été effectué pour ce relais par le calculateur de bord du véhicule en fonction de caractéristiques de rayonnement mises en mémoire dans une base de données (ou reçues via les moyens de communication 12).

Les calculs ont bien entendu fait intervenir les données météo vérifiées sur le terrain et mesurées par le ou les capteurs météo 10. L'interface 5 pourra également être conçu de façon à permettre la saisie d'un état météo observé (pluie, nuages).

Comme on le voit clairement sur la figure 2a, le procédé selon l'invention permet de visualiser en un seul coup d'oeil dans quelles zones la liaison radio peut être assurée, soit par le véhicule 22 seul, soit en utilisant le relais 23.

Bien entendu les formes des zones 24, 25, 28 et 29 ont été représentées ici globalement circulaires uniquement à titre d'exemple. Les formes réelles calculées dépendront des caractéristiques radio électriques du véhicule 22 ainsi que des caractéristiques de l'environnement à l'instant de la mesure.

On pourra, à titre de variante, remplacer les visualisations graphiques de la ou des portées par une ou plusieurs indications littérales de celles ci, indications qui apparaîtront sur l'écran 4 à côté du pictogramme 22 considéré (par exemple un chiffre donnant la portée en mètres).

Cette indication littérale pourra être également ajoutée sur l'écran 4 en complément à l'indication graphique donnée par la ou les zones 24, 25, 28, 29.

On a décrit ici la visualisation de la portée de moyens de communication. On pourra bien sûr utiliser l'écran 4 pour visualiser un autre type de portée, par exemple la portée du système d'arme emporté par le véhicule, ou bien la portée d'un ou plusieurs senseurs optiques ou électromagnétiques emportés par le véhicule. On pourra associer à chaque type de portée un type de performance. Dans la suite de la description on entendra par performance : une probabilité de qualité de communication donnée, une probabilité de détection d'un ennemi de type donné, une probabilité d'atteinte d'une cible donnée, une probabilité d'être détecté par un ennemi en ayant un niveau d'activité donné...

On choisira des couleurs différentes pour faciliter la lecture de l'écran et on pourra choisir des visualisations, simultanées ou non, d'une ou de plusieurs portées.

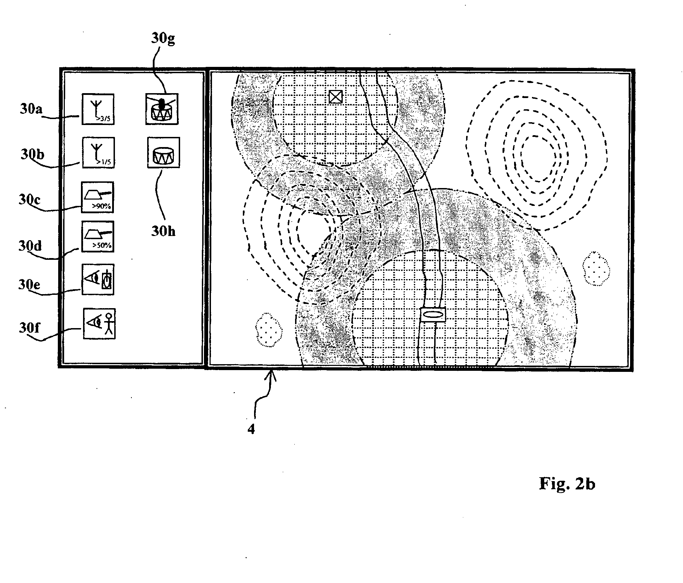

La figure 2b montre ainsi à titre d'exemple une interface comportant plusieurs touches 30a, 30b......30g, 30h qui pourront avantageusement être affichées sur l'écran 4 lui-même qui sera alors du type écran tactile (écran comportant un réseau de capteurs détectant l'appui d'un doigt).

Ces touches permettent à l'opérateur de choisir la portée qu'il souhaite visualiser sur son écran 4.

Deux types de performances sont proposées : la touche 30a permet ainsi d'afficher la zone dans laquelle la compréhension phonique est de 3/5 avec une probabilité de 90%, la touche 30b affiche la zone dans laquelle la compréhension phonique est de 1/5 avec une probabilité de 90%. On pourra afficher l'une et/ou l'autre zone simultanément.

Les touches 30c et 30d sont relatives au système d'arme 9 du véhicule. Deux types de performances sont ici proposées : la touche 30c visualise la zone dans laquelle la probabilité de succès de coup au but est supérieure à 90%, La touche 30d visualise la zone dans laquelle la probabilité de succès de coup au but est supérieure à 50%.

Les touches 30e et 30f sont relatives aux capacités de détection des senseurs 6 du véhicule. Là encore deux types de performances sont proposées : la touche 30e permet ainsi d'afficher la zone dans laquelle la probabilité de détecter un ennemi de type fantassin est d'au moins 95%. La touche 30f affiche la zone dans laquelle la probabilité de détecter un ennemi de type char est d'au moins 95%.

Les touches 30g et 30h enfin sont relative à la visualisation de la détectabilité globale du véhicule. Deux types de performances sont encore proposées : la touche 30g permet ainsi d'afficher une zone dans laquelle le véhicule a 5% de risque de se faire détecter lorsqu'il utilise ses senseurs et ses moyens de communication. La touche 30h affiche une zone dans laquelle le véhicule a 5% de risque de se faire détecter lorsqu'il coupe les senseurs et les moyens de communication.

Il est bien entendu possible d'envisager d'autres types de combinaisons et de prévoir par exemple un deuxième système d'arme, un autre niveau d'activité pour lequel on souhaite visualiser la zone de bruit engendrée...

Les nombres et/ou niveaux de performances ou seuils de détection pourront être paramétrés par l'utilisateur à l'aide du clavier et/ou de l'écran.

Suivant une autre caractéristique de l'invention, on pourra introduire dans les moyens de détermination de portée, et à l'aide d'une interface homme-machine appropriée, de nouvelles données d'environnement (végétation, bâtiments, relais de communication...). Ces données seront ajoutées à partir du clavier 5 ou par l'écran tactile 4. Le calculateur 2 fera pour cela appel à une base de données 16 groupant des caractéristiques de ces éléments.

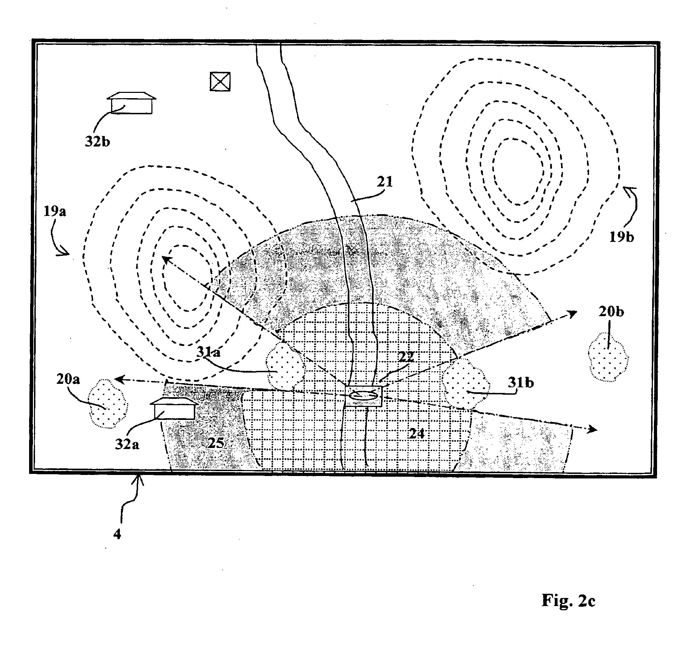

La figure 2c montre par exemple un écran 2c sur lequel on a représenté les zones 24 et 25 figurant par exemple la portée de senseurs d'observation 6. L'utilisateur a introduit manuellement deux bosquets 31a et 31b d'une taille donnée ainsi que des bâtiments 32a et 32b d'une taille donnée. Ces éléments n'étaient pas dans la base cartographique 14.

Ces nouveaux éléments sont rendus visibles sur l'écran 4 grâce au logiciel de cartographie 3.

Les caractéristiques (notamment dimensionnelles) de ces nouveaux éléments ont été utilisées par le logiciel de calcul de portée 17 qui a modifié la forme des surfaces 24 et 25 permettant de visualiser les portées. L'opérateur met en évidence ainsi instantanément sur son écran 4 les zones non observables en arrière des bosquets 31a et 31b.

Suivant une autre caractéristique du procédé selon l'invention, on utilisera les moyens de communication 12 du véhicule pour échanger avec les autres véhicules (ou éventuellement avec un poste de commandement fixe) les informations recueillies sur le terrain. On transmettra ainsi notamment les coordonnées d'obstacles réduisant ou modifiant la portée des senseurs et/ou moyens de communication et/ou systèmes d'armes.

Une telle caractéristique permet de rendre visible sur les écrans de tous les véhicules ce qui a été détecté par chacun d'eux. On améliore ainsi la maîtrise du champ de bataille en partageant les informations.

Les moyens de communication seront aussi utilisés pour transmettre les informations sur les localisations de chaque véhicule mais aussi celles relatives aux portées ou caractéristiques de détectabilité calculées par chacun.

Il est alors possible de visualiser sur l'écran de chaque véhicule non seulement les positions de chaque véhicule et/ou relais mais aussi les portées de chacun (du point de vue observation, communication ou système d'arme).

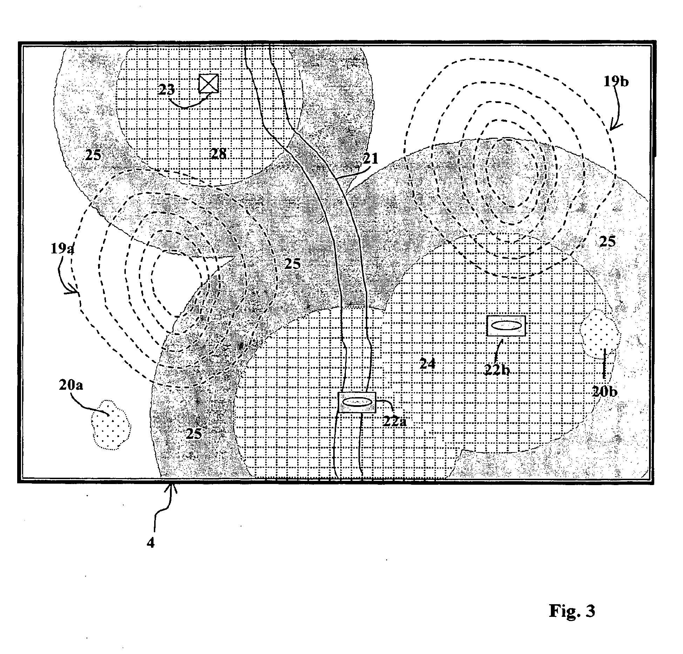

A titre d'exemple la figure 3 montre ainsi un écran 4 sur lequel apparaissent deux véhicules amis 22a et 22b ainsi qu'un relais de communication 23 et les différentes zones de portées de communication calculées 24, 25 et 28.

On constate que la zone 24 correspondant à une qualité phonique 3/5 relie les deux véhicules 22a et 22b, chaque véhicule sert alors de relais à l'autre et augmente sa portée de communication

La zone 25 correspondant à un qualité phonique de 1/5 est également fusionnée entre les deux véhicules ainsi qu'avec celle du relais 23.

L'ensemble des deux véhicules 22a et 22b et du relais 23 constitue donc un réseau dont la portée globale est accessible aux occupants des deux véhicules et visualisée sur leurs écrans 4.

On pourra là encore, à titre de variante, remplacer la visualisation graphique de la portée par une indication littérale. Par exemple par les lettres O (Oui) ou N (non) disposées à côté du pictogramme considéré et signifiant qu'il y a (O) ou qu'il n'y a pas (N) d'inter communication possible entre le véhicule portant l'écran 4 (véhicule de l'utilisateur) et le véhicule dont le pictogramme est considéré sur l'écran.

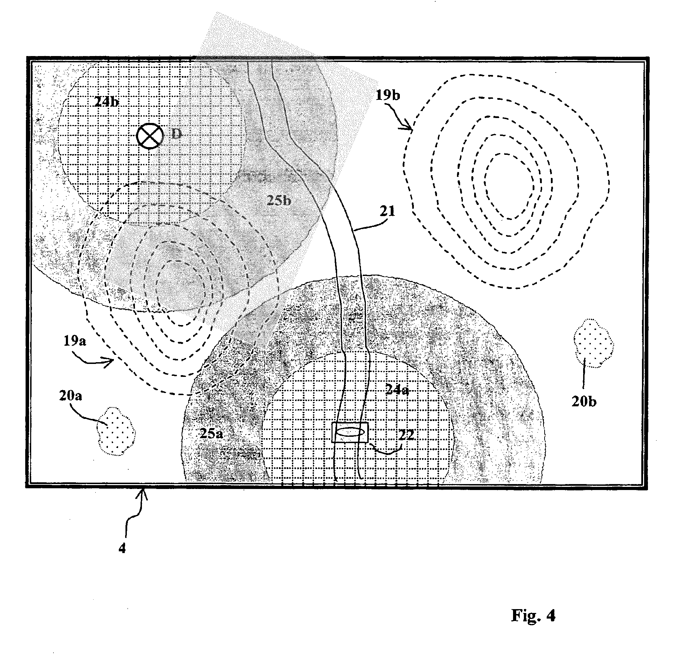

La figure 4 montre un écran mettant en oeuvre un autre mode de réalisation du procédé selon l'invention.

Suivant ce mode l'opérateur peut définir à l'aide d'une interface homme-machine appropriée un point de destination D sur l'écran 4.

Le calculateur 2 a pu déterminer les portées (par exemples des moyens de communication) et il a fait apparaître sur l'écran 4 les zones 24a et 25a de deux niveaux de portée autour du véhicule 22.

Les données d'environnement (météo, obstacles...) étant connues, le calculateur 2 est donc capable de déterminer également les portées des moyens de communication du véhicule 22 lorsque ce dernier aura rallié le point D.

Ces zones de portées 24b et 25b sont affichées sur l'écran 4. L'opérateur peut donc avant de planifier un déplacement de son véhicule vérifier ses capacités de communication futures.

On n'a représenté sur la figure 4 qu'un seul véhicule 22. Il est bien entendu que lorsque d'autres véhicules amis sont présents, il devient possible de vérifier avant déplacement si une communication directe est possible par exemple avec un véhicule situé en extrémité du réseau.

Au lieu de ne visualiser que les capacités de communications (ou les autres types de portées) à l'issue d'un déplacement prévu, il est possible d'effectuer le même calcul pour différents points d'un itinéraire.

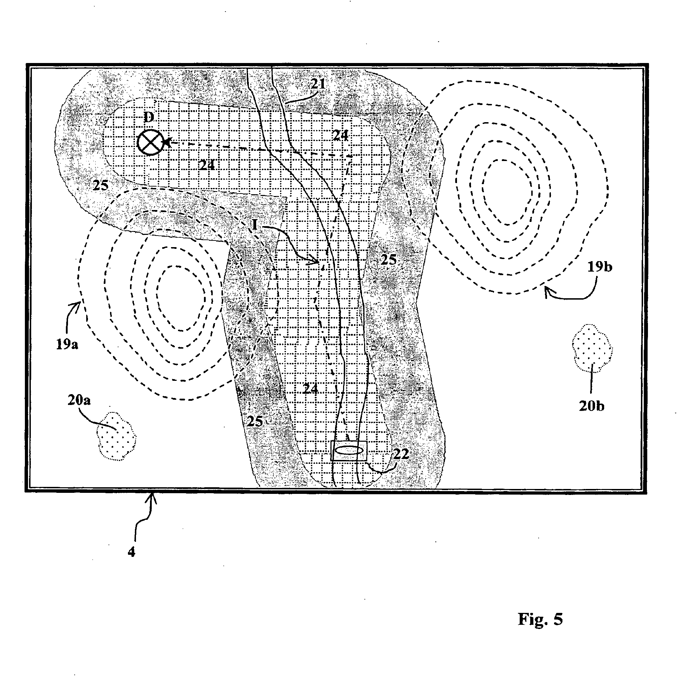

La figure 5 montre ainsi l'écran 4 d'un véhicule qui souhaite se déplacer de sa position actuelle vers une position D le long d'un itinéraire I.

L'itinéraire I est introduit par l'opérateur dans le calculateur par une interface appropriée, par exemple en suivant avec le doigt le tracé souhaité sur l'écran tactile 4.

L'itinéraire I s'affiche alors sur l'écran 4 et le calculateur 2 détermine le long des différents points de cet itinéraire et en fonction des données d'environnement connues (météo, obstacles...) les portées des moyens de communication du véhicule 22 le long de l'itinéraire jusqu'à la position D.

Une telle variante permet de vérifier la continuité d'un réseau de communication avant tout déplacement programmé. Le déplacement peut ainsi être modifié pour tenir compte de perte ou non de liaison radio. Le trajet optimal I retenu pourra être mémorisé et utilisé pour aider au pilotage du véhicule.

La visualisation des différentes zones pourra aussi être faite en temps réel pendant le déplacement du véhicule.

Il est bien entendu que si les figures 4 et 5 ont été décrites en référence à des calculs de portées de moyens de communication, l'invention peut être mise en oeuvre avec d'autres types de calculs de portées.

On pourra ainsi visualiser par des zones 24 et 25 les zones de localisation du véhicule 22 par un ennemi avec une certaine probabilité (détectabilité du véhicule). L'opérateur pourra ainsi déterminer l'itinéraire le moins risqué pour rallier deux points.

On pourra aussi mettre en oeuvre invention pour visualiser la portée d'un système d'arme au niveau d'un point de destination D et vérifier ainsi si une cible peut être atteinte.

Comme cela a été précisé précédemment on peut aussi à l'aide du procédé selon l'invention calculer les portées de véhicules ou plate-formes ennemies (quel que soit le type de plate-formes ennemies considérées : véhicules, systèmes d'artillerie, plate-formes fixes ...).

Les données permettant de calculer ces dernières portées sont contenues dans une base de données 15 intégrée au calculateur 2. Elles sont utilisées par le calculateur en combinaison avec les données d'environnement mesurées ou introduites en cours de mission.

Les données sur le véhicule ennemi sont appelées en fonction de la reconnaissance qui est faite de ce dernier, soit par un véhicule ami soit par un autre moyen de reconnaissance, par exemple un drone.

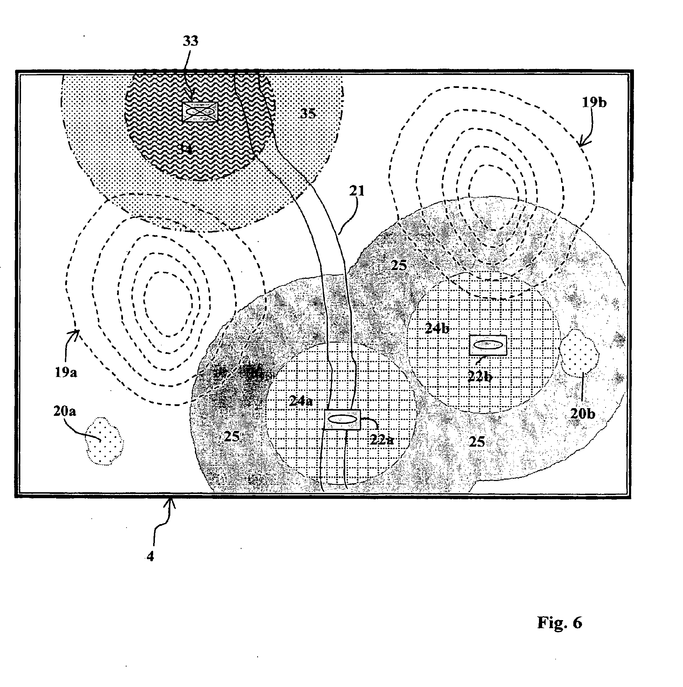

La figure 6 montre ainsi un écran 4 sur lequel sont visualisés deux véhicules amis 22a et 22b et les zones 24a, 24b et 25 qui schématisent par exemple la portée de leurs moyens de communication.

Le pictogramme 33 représente un véhicule ennemi dont les coordonnées et la nature ont été transmises par liaison radio par un drone de reconnaissance.

Le calculateur 2 a déterminé deux zones 34 et 35 autour du véhicule 33 qui correspondent par exemple à la portée du système d'arme emporté par celui ci :
Zone 34 probabilité de destruction supérieure à 90%,
Zone 35 probabilité de destruction supérieure à 50%.

On pourrait également faire apparaître sur l'écran (en combinaison ou alternativement) les zones de portées des senseurs du véhicule ennemi 33.

On voit donc que l'invention permet d'améliorer considérablement la gestion des capacités opérationnelles de véhicules, et en particulier de véhicules de combat.

En effet il devient possible de conduire une opération en ayant instantanément accès sur l'écran aux caractéristiques actuelles ou prévisibles du réseau de communication d'un groupe de véhicules. L'invention permet également de visualiser les capacités de tir ou d'observation, voire la détectabilité du groupe, tout en visualisant les ennemis et les capacités de tir de ces derniers. La programmation d'un mouvement de véhicules se trouve ainsi grandement facilitée.

Conformément à une variante de l'invention il est également possible de mettre à profit la connaissance d'un réseau de véhicules pour proposer, des solutions correctives en cas d'incident.

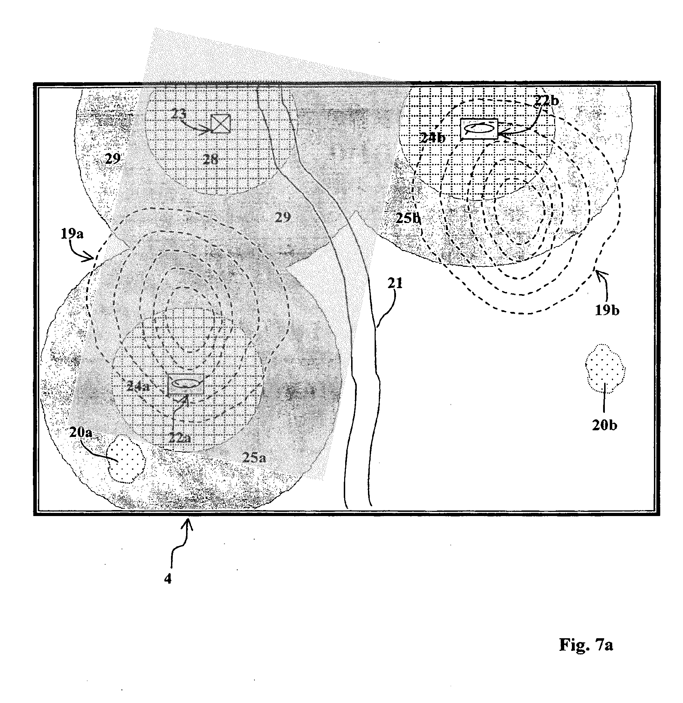

Ainsi la figure 7a montre un réseau de communication composé de deux véhicules 22a et 22b et d'un relais fixe 23. Les véhicules 22a et 22b peuvent communiquer entre eux grâce au relais 23. En effet on voit que les zones de communication phoniques de qualité (zones 24a et 24b) sont disjointes mais que les zones de communication dégradée 25a et 25b sont reliées par la zone 29 entourant le relais 23.

Cet état du réseau de communication est conservé en mémoire dans le calculateur de chaque véhicule 22a, 22b. On pourra prévoir une mémoire conservant séquentiellement les configurations successives du réseau pendant une durée d'environ 1 minute.

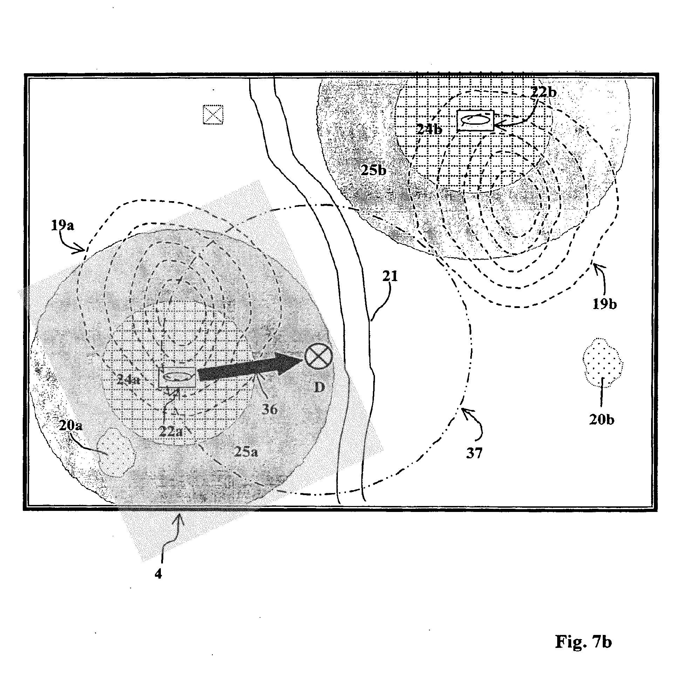

La figure 7b montre la situation après destruction du relais 23 par un ennemi.

Le réseau initial se trouve scindé en deux parties et il n'y a plus de possibilité de communication entre les deux véhicules 22a et 22b. Le calculateur 2 détecte cet événement car les signaux transmis par le relais 23 ne lui parviennent plus. Cette diminution de performance de communication du véhicule 22 commande automatiquement au niveau du logiciel 17 la recherche d'une suggestion de position pour le véhicule 22a permettant de rétablir la communication

Le calculateur 2 du véhicule 22a a en effet conservé en mémoire la localisation des zones 24b, 25b entourant le véhicule 22b. Il lui est donc possible de calculer la localisation du point D le plus proche du véhicule 22a qui permettrait à ce dernier de rétablir la communication avec le véhicule 22b.

Le logiciel de calcul de portée 17 commande alors l'affichage sur l'écran 4 du point D ainsi que d'une flèche 36 indiquant la suggestion de déplacement qui est faite au véhicule 22a. On pourra aussi faire apparaître sur l'écran 4 la portée 37 calculée de la zone 25a lorsque le véhicule 22a aura rejoint le point D.

On notera que le calculateur du véhicule 22b pourra faire des suggestions analogue au pilote du véhicule 22b.

A titre de variante on pourra utiliser le procédé selon l'invention, non pas pour suggérer un nouveau positionnement permettant de rétablir un réseau, mais pour suggérer ce positionnement comme suite à une dégradation de la liaison sans rupture de réseau (diminution de puissance ou de qualité par exemple). Il est aisé au niveau du calculateur de prévoir des moyens de mesure permettant de détecter une diminution de performance et de commander alors une boucle de calcul suggérant un positionnement approprié.

Les schémas présentés dans la présente demande ont été volontairement simplifiés pour faciliter la description des principales caractéristiques du procédé selon l'invention. Il est bien entendu qu'une mise en oeuvre opérationnelle fera intervenir un plus grand nombre de véhicules amis et ennemis.

Il est également possible à titre de variante de compléter les visualisations graphiques par des indications littérales précisant les caractéristiques des différentes zones. Pour les déterminations d'itinéraires en particulier (figure 5) on pourra, après introduction de l'itinéraire prévu, se contenter de préciser, par des indications littérales, telles que des lettres portées sur l'itinéraire, si la liaison radio est maintenue (O) ou non (N) le long de l'itinéraire sans pour autant visualiser les zones. Cela afin de ne pas surcharger l'écran.

On a décrit ici deux types de qualité de portées. On pourra bien entendu prévoir plus de deux zones autour de chaque véhicule et on pourra prévoir une possibilité de paramétrage des différentes zones.

A titre de variante, il est également possible de mettre en oeuvre, pour ce qui concerne les calculs de portée des moyens de communication, une mesure réelle des qualités des communications sur un terrain donné. Cette mesure permettra de corriger les données fournies par les bases de données et les algorithmes de calcul. Pour évaluer la qualité, on mesurera par exemple le taux d'erreur et le rapport signal sur bruit. Cette mesure sera comparée à la valeur calculée par l'algorithme d'évaluation en fonction des données d'environnement observées et elle permettra de corriger les calculs pour les autres évaluations dans l'environnement considéré.

A titre de variante, comme cela a été précisé précédemment, il est bien entendu possible de mettre en oeuvre l'invention pour d'autres types de plate-formes que des véhicules. On pourra ainsi mettre en oeuvre l'invention à partir de pièces d'artillerie ou bien à partir de combattants individuels ou fantassins qui seront tous équipés d'un système informatique portatif doté d'un écran permettant de visualiser les autres plates-formes (véhicules ou fantassins).

L'invention pourra également ne mettre en oeuvre qu'un seul type de visualisation de portée : celle des moyens de communication ou bien celle des systèmes d'armes.

On pourra également mettre en oeuvre une visualisation de portée qui ne fournira que des indications littérales de distances, avec des codes de couleur par exemple pour distinguer les portées de moyens de communication des autres portées (système d'arme, détectabilité) ainsi que les niveaux de performances associés à ces portées.

## Revendications

1. Procédé de gestion des capacités opérationnelles de plate-formes, et notamment de véhicules, et en particulier de véhicules de combat, procédé dans lequel on met en oeuvre des moyens permettant de déterminer au moins une portée en fonction de données d'environnement d'au moins un senseur (6) et/ou moyen de communication (12) et/ou au moins un système d'arme (9) emporté par au moins une plate-forme, et on met en oeuvre un logiciel de cartographie (3) permettant de visualiser sur un écran (4) une zone de terrain autour d'une représentation schématique de la ou des plate-formes, **caractérisé en ce qu'**on fait apparaître au voisinage ou autour de la ou des plate-formes au moins une surface (24, 25), ou une courbe et/ou une indication littérale visualisant une portée avec une performance donnée du senseur (6) et/ou du moyen de communication (12) et/ou du système d'arme (9) et/ou de la détectabilité de la ou des plate-formes et **en ce qu'**on introduit, à l'aide d'une interface homme-machine appropriée, les données relatives à la portée d'un relais de communication (23), la portée de ce relais étant rendue ensuite visible graphiquement et/ou littéralement sur l'écran de la ou des plate-formes.

2. Procédé de gestion des capacités opérationnelles selon la revendication 1, procédé **caractérisé en ce que** l'on peut introduire dans les moyens de détermination de portée, et à l'aide d'une interface homme-machine appropriée, de nouvelles données d'environnement.

3. Procédé d'amélioration des capacités opérationnelles selon la revendication 2, procédé dans lequel les données d'environnement sont visualisées sur l'écran (4) après leur introduction.

4. Procédé de gestion des capacités opérationnelles selon une des revendications 1 à 3, procédé **caractérisé en ce que** les moyens de communication (12) permettent d'échanger avec au moins une autre plate-forme (22) ou relais fixe (23) des informations relatives à la localisation des plate-formes ainsi que les informations relatives à la portée des senseurs et/ou des moyens de communication et/ou des systèmes d'arme des plate-formes et/ou de la détectabilité et **en ce qu'**on visualise sur l'écran (4) de chaque plate-forme la position de chaque plate-forme et/ou relais ainsi que la ou les portées de chacun.

5. Procédé de gestion des capacités opérationnelles selon la revendication 4, procédé **caractérisé en ce que** les moyens de communication (12) permettent également d'échanger entre les plate-formes et relais fixes les informations relatives à leur environnement et notamment aux obstacles (31,32) réduisant la portée des senseurs (6) et/ou moyens de communication (12) et/ou systèmes d'armes (9) et/ou modifiant la détectabilité, les obstacles étant alors rendus visibles sur les écrans (4) de chaque plate-forme.

6. Procédé de gestion des capacités opérationnelles selon une des revendications 1 à 5, procédé **caractérisé en ce qu'**on visualise pour chaque senseur (6) et/ou moyen de communication (12) et/ou système d'arme (9) au moins deux surfaces (24,25) ou courbes et/ou indications littérales visualisant la portée, chaque surface ou courbe ou indication correspondant à une performance différente pour le senseur et/ou le moyen de communication et/ou le système d'arme considéré et/ou la détectabilité.

7. Procédé de gestion des capacités opérationnelles selon une des revendications 1 à 6, procédé **caractérisé en ce qu'**on fait apparaître sur l'écran au moins une plate-forme ennemie (33) et **en ce que** l'on fait également apparaître au voisinage ou autour de cette plate-forme ennemie au moins une courbe ou surface (34,35) et/ou indication littérale visualisant la portée estimée de senseurs et/ou moyens de communication et/ou système d'arme attachés à cette plate-forme ennemie, les portées étant calculées à partir d'éléments fournis par une base de données.

8. Procédé de gestion des capacités opérationnelles selon une des revendications 1 à 7, procédé **caractérisé en ce qu'**on peut définir à l'aide d'une interface homme-machine appropriée un point de destination (D) sur l'écran (4) et **en ce que** l'on calcule la portée prévisible du senseur (6) et/ou du moyen de communication (12) et/ou du système d'arme (9) de la plate-forme et/ou de détectabilité lorsque la plate-forme se trouvera au point indiqué, et on visualise enfin sur l'écran au moins une surface ou une courbe (24b,25b) et/ou une indication littérale visualisant la portée prévisible au point (D) indiqué.

9. Procédé de gestion des capacités opérationnelles selon la revendication 8, procédé **caractérisé en ce qu'**on peut définir au moins un itinéraire (I) entre un point de départ de la plate-forme (22) et le point de destination (D) choisi et **en ce qu'**on visualise sur l'écran par au moins une surface (24,25) ou une courbe et/ou une indication littérale la portée prévisible le long de l'itinéraire pour le senseur et/ou le moyen de communication et/ou le système d'arme de la ou des plate-formes et/ou la détectabilité.

10. Procédé de gestion des capacités opérationnelles selon une des revendications 8 ou 9, procédé **caractérisé en ce qu'**on calcule en temps réel les portées pendant le déplacement de la ou des plate-formes (22) et **en ce qu'**on visualise sur l'écran de chaque plate-forme les portées ainsi calculées.

11. Procédé d'amélioration des capacités opérationnelles selon une des revendications 1 à 10, procédé **caractérisé en ce qu'**on prévoit des moyens permettant de détecter une diminution de performance de communication entre la plate-forme (22a) et au moins une autre plate-forme (22b) ou relais et **en ce que** l'on fait apparaître sur l'écran au moins une suggestion de position (D) pour la plate-forme permettant d'améliorer la communication.

12. Procédé d'amélioration des capacités opérationnelles selon une des revendications 1 à 11, procédé mis en oeuvre par un groupe d'au moins trois plate-formes ou d'au moins deux plate-formes (22a,22b) et d'au moins un relais (23), caractérisé en que l'on mémorise les portées calculées pendant un certain délai et en ce que l'on fait apparaître sur l'écran (4) au moins une suggestion de position (D) pour au moins une plate-forme du groupe de façon à rétablir les communications en cas de rupture de continuité du réseau par panne ou destruction des moyens de communication d'un relais ou d'une plate-forme.

13. Dispositif de gestion des capacités opérationnelles de plate-formes, et notamment de véhicules et en particulier de véhicules blindés, dispositif mettant en oeuvre le procédé selon une des revendications précédentes, dispositif **caractérisé en ce qu'**il comprend au moins un senseur (6) et/ou moyen de communication (12) et/ou système d'arme (9), un calculateur (2) incorporant un logiciel de cartographie (3) et un écran (4) permettant de visualiser une zone de terrain autour d'une représentation schématique d'au moins une plate-forme, le calculateur incorporant également un logiciel (17) permettant d'une part de calculer la portée du senseur et/ou du moyen de communication et/ou du système d'arme et/ou la détectabilité en tenant compte de données d'environnement de la plate-forme et d'autre part de définir et faire apparaître sur l'écran (4) au moins une surface (24,25) ou une courbe et/ou une indication littérale visualisant la portée avec une performance donnée du senseur et/ou du moyen de communication et/ou du système d'arme. et/ou de la détectabilité de la ou des plate-formes et **en ce qu'**on introduit, à l'aide d'une interface homme-machine appropriée, les données relatives à la portée d'un relais de communication (23), la portée de ce relais étant rendue ensuite visible graphiquement et/ou littéralement sur l'écran de la ou des plate-formes.

14. Dispositif de gestion des capacités opérationnelles de plate-formes selon la revendication 13, **caractérisé en ce que** les moyens de communication (12) permettent l'échange avec au moins une autre plate-forme et/ou relais fixe de données relatives aux portées calculées et **en ce que** le logiciel (17) de calcul de portée calcule et fait apparaître la portée globale du senseur et/ou des moyens de communication et/ou de détectabilité de la plate-forme considérée en tenant compte des relais de communications constitués par la ou les autres plate-formes et/ou relais fixes.

15. Dispositif de gestion des capacités opérationnelles de plate-formes selon une des revendications 13 ou 14, **caractérisé en ce que** le logiciel de calcul de portée (17) utilise des mesures de caractéristiques réelles effectuées sur le terrain.

## Patentansprüche

1. Verfahren zum Verwalten der Einsatzkapazitäten von Plattformen, und besonders von Fahrzeugen, und insbesondere von Kampffahrzeugen, bei welchem Verfahren Mittel eingesetzt werden, welche es ermöglichen, mindestens eine Reichweite in Abhängigkeit von Umgebungsdaten mindestens eines Sensors (6) und/oder Kommunikationsmittels (12) und/oder mindestens eines von mindestens einer Plattform mitgeführten Waffensystems (9) zu bestimmen, und ein Kartographie Programm (3) eingesetzt wird, welches es ermöglicht, auf einem Bildschirm (4) eine Geländezone um eine schematische Darstellung der Plattform oder Plattformen abzubilden, **dadurch gekennzeichnet, dass** in der Nähe oder um die Plattform oder Plattformen herum mindestens eine Fläche (24, 25) oder eine Kurve und/oder eine buchstäbliche Angabe eingeblendet wird, welche eine Reichweite mit einer gegebenen Leistung des Sensors (6) und/oder des Kommunikationsmittels (12) und/oder des Waffensystems (9) und/oder der Erfassbarkeit der Plattformen oder Plattformen abbilden, und dass mit Hilfe einer geeigneten Mensch-Maschine Schnittstelle die Daten bezüglich der Reichweite eines Kommunikationsrelais (23) eingeführt werden, wobei die Reichweite dieses Relais dann graphisch und/oder buchstäblich auf dem Bildschirm der Plattform oder Plattformen sichtbar gemacht wird.

2. Verfahren zum Verwalten der Einsatzkapazitäten nach Anspruch 1, wobei das Verfahren **dadurch gekennzeichnet ist, dass** mit Hilfe einer geeigneten Mensch-Maschine Schnittstelle neue Umgebungsdaten in die Mittel zur Bestimmung der Reichweite eingeführt werden können.

3. Verfahren zum Verbessern der Einsatzkapazitäten nach Anspruch 2, bei welchem Verfahren die Umgebungsdaten nach ihrer Einführung auf dem Bildschirm (4) eingeblendet werden.

4. Verfahren zum Verwalten der Einsatzkapazitäten nach einem der Ansprüche 1 bis 3, wobei das Verfahren **dadurch gekennzeichnet ist, dass** die Kommunikationsmittel (12) es ermöglichen, mit mindestens einer weiteren Plattform (22) oder einem festen Relais (23) Informationen bezüglich der Lokalisierung der Plattformen sowie die Informationen bezüglich der Reichweite der Sensoren und/oder Kommunikationsmittel und/oder der Waffensysteme der Plattformen und/oder der Erfassbarkeit auszutauschen, und dass auf dem Bildschirm (4) jeder Plattform die Position jeder Plattform und/oder Relais sowie die Reichweite oder Reichweiten eines jeden eingeblendet wird.

5. Verfahren zum Verwalten der Einsatzkapazitäten nach Anspruch 4, wobei das Verfahren **dadurch gekennzeichnet ist, dass** die Kommunikationsmittel (12) es ebenfalls ermöglichen, zwischen den Plattformen und festen Relais die Informationen bezüglich ihrer Umgebung und insbesondere der Hindernisse (31, 32), welche die Reichweite der Sensoren (6) und/oder Kommunikationsmittel (12) und/oder Waffensysteme (9) vermindern und/oder die Erfassbarkeit verändern, auszutauschen, wobei die Hindernisse nun auf den Bildschirmen (4) jeder Plattform sichtbar gemacht werden.

6. Verfahren zum Verwalten der Einsatzkapazitäten nach einem der Ansprüche 1 bis 5, wobei das Verfahren **dadurch gekennzeichnet ist, dass** für jeden Sensor (6) und/oder jedes Kommunikationsmittel (12) und/oder Waffensystem (9) mindestens zwei Flächen (24, 25) oder Kurven und/oder buchstäbliche Angaben zur Abbildung der Reichweite abgebildet werden, wobei jede Fläche oder Kurve oder Angabe einer unterschiedlichen Leistung für den Sensor und/oder das Kommunikationsmittel und/oder das betroffene Waffensystem und/oder die Erfassbarkeit entspricht.

7. Verfahren zum Verwalten der Einsatzkapazitäten nach einem der Ansprüche 1 bis 6, wobei das Verfahren **dadurch gekennzeichnet ist, dass** auf dem Bildschirm mindestens eine feindliche Plattform (33) eingeblendet wird, und dass auch in der Nähe oder um diese feindliche Plattform herum mindestens eine Kurve oder Fläche (34, 35) und/oder buchstäbliche Angabe eingeblendet wird, welche die geschätzte Reichweite von Sensoren und/oder Kommunikationsmitteln und/oder Waffensystemen, welche an dieser feindlichen Plattform angebracht sind, abbilden, wobei die Reichweiten ausgehend von Elementen berechnet werden, welche von einer Datenbank bereit gestellt werden.

8. Verfahren zum Verwalten der Einsatzkapazitäten nach einem der Ansprüche 1 bis 7, wobei das Verfahren **dadurch gekennzeichnet ist, dass** mit Hilfe einer geeigneten Mensch-Maschine Schnittstelle ein Zielpunkt (D) auf dem Bildschirm (4) definiert werden kann, und dass die voraussichtliche Reichweite des Sensors (6) und/oder des Kommunikationsmittels (12) und/oder des Waffensystems (9) der Plattform und/oder der Erfassbarkeit berechnet wird, wenn sich die Plattform am angezeigten Punkt befinden wird, und dass dann auf dem Bildschirm mindestens eine Fläche oder eine Kurve (24a, 25b) und/oder eine buchstäbliche Angabe abgebildet wird, welche die voraussichtliche Reichweite am angezeigten Punkt (D) abbildet.

9. Verfahren zum Verwalten der Einsatzkapazitäten nach Anspruch 8, wobei das Verfahren **dadurch gekennzeichnet ist, dass** mindestens eine Strecke (I) zwischen einem Ausgangspunkt der Plattform (22) und dem gewählten Zielpunkt (D) definiert werden kann, und dass auf dem Bildschirm durch mindestens eine Fläche (24, 25) oder eine Kurve oder eine buchstäbliche Angabe die voraussichtliche Reichweite entlang der Strecke für den Sensor und/oder das Kommunikationsmittel und/oder das Waffensystem der Plattform oder Plattformen und/oder die Erfassbarkeit abgebildet wird.

10. Verfahren zum Verwalten der Einsatzkapazitäten nach einem der Ansprüche 8 oder 9, wobei das Verfahren **dadurch gekennzeichnet ist, dass** die Reichweiten während der Verlagerung der Plattform oder Plattformen (22) in Echtzeit berechnet werden, und dass die so berechneten Reichweiten auf dem Bildschirm einer jeden Plattform abgebildet werden.

11. Verfahren zum Verbessern der Einsatzkapazitäten nach einem der Ansprüche 1 bis 10, wobei das Verfahren **dadurch gekennzeichnet ist, dass** Mittel vorgesehen werden, welche es ermöglichen, eine Verminderung der Leistung der Kommunikation zwischen der Plattform (22a) und mindestens einer weiteren Plattform (22b) oder Relais zu erfassen, und dass mindestens eine Empfehlung einer Position (D) für die Plattform auf dem Bildschirm eingeblendet wird, welche es ermöglicht, die Kommunikation zu verbessern.

12. Verfahren zum Verbessern der Einsatzkapazitäten nach einem der Ansprüche 1 bis 11, wobei das Verfahren von einer Gruppe von mindestens drei Plattformen oder mindestens zwei Plattformen (22a, 22b) und mindestens einem Relais (23) durchgeführt wird, **dadurch gekennzeichnet, dass** die berechneten Reichweiten während einer bestimmten Zeitspanne abgespeichert werden, und dass mindestens eine Empfehlung einer Position (D) für mindestens eine Plattform der Gruppe auf dem Bildschirm (4) eingeblendet wird, um die Kommunikationen im Falle der Unterbrechung des Netzes durch Fehler oder Zerstörung der Kommunikationsmittel eines Relais oder einer Plattform wieder herzustellen.

13. Vorrichtung zum Verwalten der Einsatzkapazitäten von Plattformen, und besonders von Fahrzeugen, und insbesondere von gepanzerten Fahrzeugen, wobei die Vorrichtung das Verfahren nach einem der vorhergehenden Ansprüche durchführt, wobei die Vorrichtung **dadurch gekennzeichnet ist, dass** sie mindestens einen Sensor (6) und/oder ein Kommunikationsmittel (12) und/oder ein Waffensystem (9), einen Rechner (2), welcher ein Kartographie Programm (3) enthält, und einen Bildschirm (4) umfasst, welcher es ermöglicht, eine Geländezone um eine schematische Darstellung von mindestens einer Plattform abzubilden, wobei der Rechner auch ein Programm (17) enthält, welches es ermöglicht, einerseits die Reichweite des Sensors und/oder des Kommunikationsmittels und/oder des Waffensystems und/oder der Erfassbarkeit unter Berücksichtigung der Umgebungsdaten der Plattform zu berechnen, und andererseits mindestens eine Fläche (24, 25) auf dem Bildschirm (4) oder eine Kurve und/oder eine buchstäbliche Angabe, welche die Reichweite mit einer gegebenen Leistung des Sensors und/oder des Kommunikationsmittels und/oder des Waffensystems und/oder der Erfassbarkeit der Plattformen oder Plattformen abbilden, zu definieren und einzublenden und dass mit Hilfe einer geeigneten Mensch-Maschine Schnittstelle die Daten bezüglich der Reichweite eines Kommunikationsrelais (23) eingeführt werden, wobei die Reichweite dieses Relais dann graphisch und/oder buchstäblich auf dem Bildschirm der Plattform oder Plattformen sichtbar gemacht wird.

14. Vorrichtung zum Verwalten der Einsatzkapazitäten von Plattformen nach Anspruch 13, **dadurch gekennzeichnet, dass** die Kommunikationsmittel (12) den Austausch von Daten bezüglich der berechneten Reichweiten mit mindestens einer weiteren Plattform und/oder einem festen Relais zu ermöglichen, und dass das Programm (17) zur Berechnung der Reichweite die gesamte Reichweite des Sensors und/oder der Kommunikationsmittel und/oder der Erfassbarkeit der betroffenen Plattform unter Berücksichtigung der Kommunikationsrelais, welche von der oder den weiteren Plattformen und/oder festen Relais gebildet werden, berechnet und einblendet.

15. Vorrichtung zum Verwalten der Einsatzkapazitäten von Plattformen nach einem der Ansprüche 13 oder 14, **dadurch gekennzeichnet, dass** das Programm zur Berechnung der Reichweite (17) Messungen von reellen Kenndaten verwendet, welche im Gelände erfolgt sind.

## Claims

1. A process to manage the operational capacities of platforms, and namely that of vehicles, and in particular combat vehicles, process in which means are implemented enabling the determination of at least one range according to the environmental data of at least one sensor (6) and/or communication means (12) and/or at least one weapon system (9) carried by at least one platform, and in which cartography software (3) is implemented enabling the display on a screen (4) of a zone of terrain around a schematic drawing of the platform(s), **characterized in that** are displayed in the vicinity or around the platform(s) at least one area (24, 25), or a curve and/or literal indication visualizing a range with a given performance of the sensor (6) and/or the communication means (12) and/or the weapon system (9) and/or of the detectability of the platform(s) and wherein the data related to the range of a communication relay (23) is entered by means of a man-machine interface, the range of this relay being then displayed graphically and/or literally on the screen of the platform(s).

2. A process to manage operational capacities according to Claim 1, process **characterized in that** new environmental data can be entered into the range determination means by using the appropriate man-machine interface.

3. A process to improve operational capacities according to Claim 2, process **characterized in that** the environmental data are displayed on the screen (4) after their input.

4. A process to manage operational capacities according to one of Claims 1 to 3, process **characterized in that** the communication means (12) enable exchanges to be made with at least one other platform (22) or fixed relay (23) of information related to the location of the platforms as well as information related to the range of the sensors and/or the communication means and/or the weapon systems of the platforms and/or of the detectability and **in that** the screen (4) of each platform displays the position of each platform and/or relay as well as their respective ranges.

5. A process to manage operational capacities according to Claim 4, process **characterized in that** the communication means (12) also enable exchanges to be made between the platforms and fixed relay of information related to their environment and namely related to any obstacles (31, 32) that reduce the range of the sensors (6) and/or the communication means (12) and/or the weapon systems (9) and/or modifying the detectability, the obstacles thus being made visible on the screens (4) of each platform.

6. A process to manage operational capacities according to one of Claims 1 to 5, process **characterized in that** at least two areas (24, 25) or curves and/or literal indications to visualize the range are displayed for each sensor (6) and/or communication means (12) and/or weapon system (9), each area or curve or indication corresponding to a different performance for the sensor and/or the communication means and/or the weapon system under consideration and/or the detectability.

7. A process to manage operational capacities according to one of Claims 1 to 6, process **characterized in that** the screen displays at least one enemy platform (33) and wherein at least one curve or area (34, 35) and/or literal indication is displayed in the vicinity or around said enemy platform to visualize the estimated range of the sensors and/or communication means and/or weapon system attached to said enemy platform, the ranges being calculated from elements supplied by a database.

8. A process to manage operational capacities according to one of Claims 1 to 7, process **characterized in that** a destination point (D) can be defined on the screen (4) using a suitable man-machine interface and wherein the predicted range of the sensor (6) and/or communication means (12) and/or weapon system (9) of the platform and/or the detectability when the platform is at the point indicated, and lastly the screen displays at least one area or curve (24b, 25b) and/or literal indication to visualize the predictable range of the point (D) indicated.

9. A process to manage operational capacities according to Claim 8, process **characterized in that** at least one itinerary can be defined between a starting point of the platform (22) and the destination point (D) chosen and wherein the screen displays by at least one area (24, 25) or curve and/or literal indication the predictable range along the itinerary for the sensor and/or the communication means and/or the weapon system of the platform(s) and or the detectability.

10. A process to manage operational capacities according to one of Claims 8 or 9, process **characterized in that** the ranges are calculated in real time when the platform(s) (22) is (are) on the move and wherein the screen on each platform displays the ranges thus calculated.

11. A process to improve operational capacities according to one of Claims 1 to 10, process **characterized in that** means are provided to detect a reduction in communication performance between the platform (22a) and at least one other platform (22b) or relay and wherein the screen displays at least one suggested position (D) for the platform that will improve communications.

12. A process to improve operational capacities according to one of Claims 1 to 11, process implemented by a group of at least three platforms or at least two platforms (22a, 22b) and at least one relay (23), **characterized in that** the ranges calculated during a certain time are memorized and wherein the screen (4) displays at least one suggested position (D) for at least one platform of the group so as to re-establish communications should the continuity of the network be interrupted by the breakdown or destruction of the communication means of a relay or a platform.

13. A device to manage the operational capacities of platforms and namely of vehicles and in particular armoured vehicles, device implementing the process according to one of the above Claims, device **characterized in that** it comprises at least one sensor (6), and/or communication means (12) and/or weapon system (9), a processor (2) incorporating cartography software (3) and a screen (4) to visualize a zone of terrain around a schematic representation of at least one platform, the processor also incorporating software (17) firstly enabling the range to be calculated for the sensor and/or communication means and/or weapon system and/or detectability by taking into account the platform's environmental data and secondly defining and displaying on the screen (4) at least one area (24, 25) or curve and/or literal indication to visualize the range with a given performance of the sensor and/or the communication means and/or the weapon system and/or the detectability of the platform and wherein the data related to the range of a communication relay (23) is entered using a suitable man-machine interface, the range of this relay thereafter being graphically and/or literally displayed on the screen of the platform(s).

14. A device to manage the operational capacities of platforms according to Claim 13, **characterized in that** the communication means (12) enable the exchange of data related to the calculated ranges with at least one other platform and/or fixed relay and wherein the range calculation software (17) calculates and displays the overall range of the sensor and/or communication means and/or the detectability of the platform under consideration taking into account the communication relays constituted by the other platform(s) and/or fixed relays.

15. A device to manage the operational capacities of platforms according to one of Claims 13 or 14, **characterized in that** the range calculation software (17) uses the measurements of actual characteristics made in the field.
